# EUROPÄISCHE PATENTSCHRIFT

(11) **EP 4 066 299 B1**
(45) Veröffentlichungstag und Bekanntmachung des Hinweises auf die Patenterteilung: **25.12.2024**
(21) Anmeldenummer: 20799707.3
(22) Anmeldetag: 04.11.2020
(51) Int. Cl.: H01M 8/0276, C25B 1/04, C25B 9/23, C25B 9/73, C25B 9/77, H01M 8/10, H01M 8/0206, H01M 8/0228, H01M 8/0232, H01M 8/0245, H01M 8/0286

(54) **DICHTUNGSANORDNUNG FÜR ELEKTROCHEMISCHE ZELLEN DER PEM-BAUART**
SEAL ARRANGEMENT FOR ELECTROCHEMICAL CELLS OF THE PEM TYPE
ENSEMBLE D'ÉTANCHÉITÉ POUR CELLULES ÉLECTROCHIMIQUES DU TYPE PEM

(30) Priorität: 25.11.2019 WO PCT/EP2019/082449
(43) Veröffentlichungstag der Anmeldung: 05.10.2022
(73) Patentinhaber: Hoeller Electrolyzer GmbH, 23966 Wismar (DE)
(72) Erfinder: HÖLLER, Stefan, 23552 Lübeck (DE)
(74) Vertreter: Patentanwälte Hemmer Lindfeld Frese Partnerschaft mbB
(86) Internationale Anmeldenummer: PCT/EP2020/080901
(87) Internationale Veröffentlichungsnummer: WO 2021/104812

(56) Entgegenhaltungen:
- DE-A1- 102012 221 730
- DE-T5- 112015 002 427
- JP-A- 2007 200 751
- US-A1- 2012 107 718
- US-A1- 2017 279 133

## Beschreibung

Die Erfindung betrifft eine elektrochemische Zelle, insbesondere ein Stack von elektrochemischen Zellen, im Speziellen eine Dichtungsanordnung für elektrochemische Zellen der PEM-Bauart, insbesondere für einen Elektrolyseur.

Elektrochemische Zellen der vorgenannten Art werden typischerweise in Stacks verbaut, in denen eine Vielzahl solcher Zellen in Reihe geschaltet und in einem Stapel angeordnet sind. Derartige Stacks zählen beispielsweise im Bereich der Brennstoffzellen zum Stand der Technik und dienen zur Stromherstellung durch katalytische Oxidation von Wasserstoff. Auch Elektrolyseure sind in einer solchen Stack-Anordnung verfügbar, mit diesen wird durch Einbringen von elektrischer Energie und Wasser Wasserstoff und Sauerstoff erzeugt, von denen typischerweise eine Komponente, meist Wasserstoff, zwischengespeichert wird. Um die Erzeugung und Speicherung möglichst effektiv zu gestalten, ist man bemüht, den Stack so auszugestalten, dass er mit einem möglichst hohen Betriebsdruck von beispielsweise 100 bar betrieben werden kann, da dann häufig auf eine Nachverdichtung des erzeugten Gases verzichtet werden kann oder diese mit vergleichsweise kleinem Energieaufwand erfolgen kann. Je höher der Druck in den elektrochemischen Zellen ist, desto höher sind die im Stapel wirkenden Kräfte. Während die mechanischen Kräfte durch größere Dimensionierung der Festigkeit der Endplatten und der Zuganker aufgenommen werden können, bereiten die Abdichtungen der Zellen mit zunehmendem Druck, ein größeres Problem. Mit zunehmender Druckkraft werden die Dichtungen zunehmend belastet, mit Versagen einer Dichtung jedoch wird das gesamte Stack unbrauchbar.

Aus der DE 11 2015 002 427 T5 ist eine metallische Bipolarplatte für ein elektrochemisches System mit einer Dichtungsanordnung bekannt. In der Bipolarplatte ist eine umlaufende Sicke mit einem M-förmigen Querschnitt ausgebildet. Die Sicke wurde durch mechanisches Umformen der Bipolarplatte gebildet.

Aus der JP 2007/200751 ist ebenfalls eine Bipolarplatte mit einer seitlichen Dichtungsanordnung bekannt. Für diese Dichtungsanordnung sind Stützstrukturen vorgesehen, die ebenfalls durch mechanischen Umformen der Bipolarplatte gebildet werden.

Entsprechend ist aus der US 2012/107718 A1 eine Platte bekannt, die zwei umlaufende Dichtungen aufweist. Stützstrukturen für diese Dichtungen wurden gebildet, indem die Platte mechanisch verformt wurde.

Aus DE 10 2012 221 730 A1 ist ebenfalls eine Bipolarplatte für eine Brennstoffzelle bekannt, die eine umlaufende Dichtung aufweist. Zur Positionierung der Dichtung auf der Bipolarplatte wurde die Bipolarplatte mit einem formgebenden Verfahren umgeformt.

Aus der US 2017/0279133 A1 ist ebenfalls eine Bipolarplatte mit einer umlaufenden Dichtung bekannt. Die Bipolarplatte weist eine Stützstruktur auf, die durch mechanisches Umformen der Bipolarplatte hergestellt wurde.

Vor diesem Hintergrund liegt der Erfindung die Aufgabe zu Grunde, eine Dichtungsanordnung für eine elektrochemische Zelle der PEM-Bauart, insbesondere für einen Elektrolyseur, so auszubilden, dass die Dichtung möglichst hohen Drücken standhält.

Diese Aufgabe wird gemäß der Erfindung durch eine Dichtungsanordnung mit den in Anspruch 1 angegebenen Merkmalen gelöst. Vorteilhafte Ausgestaltungen der Erfindung sind in den Unteransprüchen, den nachfolgenden Beschreibung und den Zeichnungen angegeben.

Die erfindungsgemäße Dichtungsanordnung für eine elektrochemische Zelle der PEM-Bauart, insbesondere für einen Elektrolyseur, weist eine metallische Platte und eine darauf angeordnete Dichtung auf, welche mindestens einen geschlossenen, auf der Platte angeordneten Dichtring bildet. Gemäß der Erfindung ist eine umlaufende, die Dichtung nach innen abstützende innere Stützstruktur gebildet sowie eine die Dichtung nach außen abstützende äußere Stützstruktur, welche aus gesintertem Metall gebildet und stoffschlüssig mit der Platte verbunden sind.

Grundgedanke der erfindungsgemäßen Lösung ist es, auf der metallischen Platte, welche typischerweise mediendurchlässige Ausnehmungen in der Mitte aufweist und dort beispielsweise als Lochblech ausgebildet ist, welches zum Beispiel unter Zwischenschaltung eines Kohlevlieses als Gasdiffusionsschicht auf einer ionendurchlässigen gasdichten Membran (PEM-Membran) liegt, sowohl nach innen als auch nach außen hin Stützstrukturen vorzusehen, welche die Dichtung zu beiden Seiten abstützen. Diese Stützstrukturen sind gemäß der Erfindung aus gesintertem Metall gebildet und stoffschlüssig mit der Platte verbunden. Vorzugsweise sind die Stützstrukturen aus demselben Metall wie die Platte ausgebildet und stoffschlüssig mit dieser verbunden, beispielsweise durch Sintern.

Wenn die Dichtung in einfachster Form ein auf der Platte angeordneter umlaufender Dichtring ist, dann ist dieser nach innen hin durch eine Stützstruktur abgestützt, welche verhindert, dass das Dichtmaterial bei Kraftbeaufschlagung nach innen wandert und nach außen hin durch eine äußere Stützstruktur abgestützt, welche verhindert, dass das Material nach außen wandert. Die Dichtung ist somit zwischen den Stützstrukturen vorzugsweise formschlüssig gehalten, sodass das sonst bei hohen Flächenpressungen auftretende Fließverhalten wirksam unterbunden wird. Diese Stützstrukturen verhindern nicht nur ein Fließen der Dichtung, sondern bilden darüber hinaus eine Art Abstandshalter, welcher einen Mindestabstand zwischen der metallischen Platte und der demgegenüber abzudichtenden Gegenfläche gewährt.

Grundsätzlich ist eine Anordnung der Stützstrukturen zu beiden Seiten der Dichtung, also nach innen und nach außen vorteilhaft. Es kann jedoch insbesondere bei dem Betrieb der elektrochemischen Zelle, insbesondere eines Zellenstacks mit hohem Innendruck, wie dies bei Elektrolyseuren zur komprimierten Speicherung der Reaktionsgase vorteilhaft ist, genügen, nur eine der Stützstrukturen vorzusehen, insbesondere vorteilhaft eine äußere Stützstruktur, um auf diese Weise eine Barriere gegen das Kriechen der Dichtung aufgrund des erhöhten Innendrucks nach außen zu bilden.

Gemäß einer vorteilhaften Weiterbildung der Erfindung sind zu beiden Seiten der Platte Dichtungen angeordnet, welche auf jeder Seite mindestens einen geschlossenen, auf der Platte angeordneten Dichtring bilden, wobei auf jeder Seite der Platte eine umlaufende, die jeweilige Dichtung nach innen abstützende innere Stützstruktur gebildet ist und eine, die jeweilige Dichtung nach außen abstützende äußere Stützstruktur gebildet ist, welche aus gesintertem Metall gebildet und stoffschlüssig mit der Platte verbunden sind. Eine solche Anordnung gewährleistet, dass die Dichtungen zu beiden Seiten der Platten stabilisiert sind, deren Fließverhalten bei hohem Anpressdruck verhindert wird und darüber hinaus einen Mindestabstand zur Gegenfläche gewahrt wird. In Verbindung mit der jeweiligen Gegenfläche bilden die Stützstrukturen mit der Platte und der Gegenfläche einen kammerartigen Raum, welcher den darin angeordneten Dichtring aufnimmt und das Zusammendrücken, d.h. Komprimieren des Dichtrings auf das Volumen dieses Raumes begrenzt.

Gemäß einer vorteilhaften Ausgestaltung der Erfindung ist auch die Platte selbst aus gesintertem Metall gebildet und vorzugsweise im 3D-Druckverfahren hergestellt. Dabei kann bevorzugt nicht nur die Platte selbst sondern es können auch die Stützstrukturen in diesem Verfahren hergestellt sein, vorzugsweise in einem Arbeitsgang beim Drucken der Platte.

Vorteilhaft ist die den Dichtring bildende Dichtung so ausgebildet, dass sie den Bereich zwischen der inneren und der äußeren Stützstruktur vorzugsweise vollständig ausfüllt. Dabei ist es besonders vorteilhaft, wenn die Dichtung zumindest im Bereich zwischen den Stützstrukturen unmittelbar an der metallischen Platte anliegt. Durch die dichte Anlage der Dichtung an der Platte ist einerseits ein Anhaften der Dichtung an der Platte gewährleistet und andererseits eine gute und vollständige Dichtwirkung. In diesem Bereich kann ein gegebenenfalls erforderlicher Haftvermittler eingebracht werden, ohne dass die Gefahr besteht, dass dieser Haftvermittler in Bereiche außerhalb der Stützstrukturen und somit in den aktiven Zellaufbau gelangt. Diese Haftvermittler beschädigen oder zerstören den Katalysator auf der Membran, wenn sie mit diesem in Verbindung gelangen, weshalb es wichtig ist, dass ihr Anwendungsbereich örtlich zuverlässig begrenzt ist.

Besonders vorteilhaft ist es, wenn die Dichtung die Stützstrukturen vorzugsweise vollständig überdeckt. Zwar ist es grundsätzlich vorgesehen, dass die Dichtung im Bereich zwischen den Stützstrukturen deutlich höher als die Stützstrukturen ausgebildet ist, um eine Abdichtung in diesem Bereich sicherzustellen, doch hat die Überdeckung der Stützstrukturen den Vorteil, bei maximaler Kompression der Dichtung stets zwischen der Oberseite der Stützstruktur und der Gegenfläche Dichtmaterial befindlich ist, also eine zusätzliche Abdichtung gewährleistet ist. Darüber hinaus kann durch die Überdeckung der Stützstrukturen mit Dichtmaterial die Dichtung zusätzlich am Stützmaterial fixiert werden, wodurch eine innige Verbindung zwischen der Dichtung und der Platte bzw. den darauf angeordneten Stützstrukturen gebildet wird.

Besonders günstig ist es, wenn eine Stützstruktur durch einen Wulst gebildet wird. Vorteilhaft handelt es sich dabei um einen ringförmig umlaufenden Wulst, welche die Dichtung vollständig umlaufend abstützt. Im Bereich von gasführenden Kanälen kann der Wulst und/oder die Dichtung unterbrochen sein oder eine geringere Höhe aufweisen, ohne hierdurch die vollständige Abstützung der Dichtung über den gesamten umlaufenden Bereich einzuschränken, da im Bereich solcher Kanäle eine Abstützung entbehrlich ist. Vorteilhaft sind die Stützstrukturen so ausgebildet und angeordnet, dass sie an den zueinander weisenden Seiten rampenförmig und mit Abstand zueinander auslaufend ausgebildet sind. Das heißt, dass die innere Stützstruktur, typischerweise ein Wulst, einen schräg und flach auslaufenden Bereich in Richtung auf die äußere Stützstruktur hat und die äußere Stützstruktur einen schräg und flach auslaufenden, also rampenförmigen Bereich zur inneren Stützstruktur hin, hat. Die rampenförmigen Abschnitte laufen dabei mit Abstand zueinander aus, sodass der dazwischen gebildete Bereich stützstrukturenfrei ist, sodass die Dichtung hier unmittelbar an der metallischen Platte anliegen kann. An den von der Dichtung abgewandten Seiten können die Stützstrukturen deutlich steiler auslaufen, ebenso wie oberhalb des rampenförmigen Bereichs, wie dies weiter unten anhand eines Ausführungsbeispiels verdeutlicht werden wird.

Dieses rampenförmige Auslaufen der Stützstrukturen ist besonders vorteilhaft, um eine möglichst vollständige Ausfüllung des dadurch begrenzten Raumes mit Dichtmaterial zu erreichen und eine gute Haftwirkung der Dichtung auch im Bereich der Stützstrukturen sicherzustellen.

In einfachster Form kann ein solcher zwischen einer inneren und einer äußeren Stützstruktur angeordneter Dichtring an seiner zur Gegenfläche gerichteten Seite, also an der von der Platte abgewandten Seite eben ausgebildet sein, dann liegt dieser flächig an der Gegenfläche an. Eine solche flächige Anlage ist beispielsweise zur Anlage an der ionendurchlässigen Membran vorteilhaft, da dann die Membran über die gesamte Fläche der Dichtung mit dergleichen Kraft beaufschlagt wird. Insbesondere zur anderen Seite der Platte ist es jedoch vorteilhaft, wenn die Dichtung nicht als plane Fläche, sondern strukturiert ausgebildet ist. So kann die Dichtung vorteilhaft an der von der Platte abgewandten Seite mit Dichtlippen versehen sein, die vorzugsweise über die gesamte Dichtung durchgehend umlaufen. Dabei ist es vorteilhaft, wenn eine Anzahl von Dichtlippen gebildet ist, welche quasi wie konzentrische Ringe an der zur Gegenfläche gerichteten Seite der Dichtung zwischen der inneren und der äußeren Stützstruktur vorgesehen sind. Auch kann diese Seite der Dichtung im Querschnitt zumindest an der nach außen gerichteten Seite wellenförmig ausgebildet sein, auch dadurch entstehen konzentrische Anlageflächen im Bereich zwischen den Stützstrukturen.

Die zwischen den Stützstrukturen auf der Platte angeordnete Dichtung, welche einen umlaufenden Dichtring bildet, wird vorteilhaft durch Aufspritzen der Dichtung nach dem Herstellen der Stützstrukturen gebildet. Eine solche Dichtung kann beispielsweise aus FKM (Fluorkautschuk) gebildet sein, wie dies zum Stand der Technik zählt. Das Aufspritzen erfolgt typischerweise im Spritzgussverfahren, das heißt in einem Werkzeug, welches die metallische Platte mit ihren Stützstrukturen und die Begrenzungen bildet.

Die metallische Platte ist vorteilhaft durch einen Folienabschnitt gebildet, also einen metallischen Blechabschnitt. Die Platte aus einer Folie herauszutrennen ist besonders günstig, derartige Folien stehen kostengünstig zur Verfügung und können durch Schneiden in die gewünschten Abmessungen des späteren Blechabschnitts gebracht werden.

Die Stützstrukturen selbst werden vorteilhaft im 3D-Druck hergestellt, sie werden entweder direkt auf die Platte aufgebracht oder zunächst auf eine aus Kunststoff bestehende Trägerfolie, wobei die Stützstrukturen durch Sintern mit der Platte verbunden werden. Wenn diese Stützstrukturen mittels 3D-Druck auf der metallischen Platte aufgebracht werden, erfolgt entweder ein Aufschmelzen des Materials während des Druckens, also die stoffschlüssige Verbindung unmittelbar beim Auftragen oder aber ein Aufbringen eines Metallpulvers mit einem Binder, welcher beim späteren Sintern entfernt wird, wobei sich das Metallpulver miteinander und mit der darunter befindlichen Metallplatte stoffschlüssig verbindet.

Die Stützstrukturen können vorteilhaft und alternativ im Siebdruckverfahren aufgetragen werden, was insbesondere in der Serienfertigung kostengünstig und produktiv ist. Die Verbindung der Stützstrukturen mit der Metallplatte erfolgt dann vorteilhaft durch Sintern. Dabei können die Stützstrukturen durch Siebdruck unmittelbar auf die Metallplatte oder durch Siebdruck auf eine Kunststofffolie als Träger aufgebracht werden.

Wenn die Stützstrukturen unter Zuhilfenahme einer Kunststofffolie als Träger aufgebracht sind, erfolgt das Entfernen der Kunststofffolie beim Sintern, bei dem die Stützstrukturen mit der Platte verbunden werden. Es versteht sich, dass wenn zu beiden Seiten Stützstrukturen vorgesehen sind, diese gleichzeitig oder aber in getrennten Arbeitsgängen (erst auf der einen Seite und dann auf der anderen Seite) durch Sintern mit der Platte verbunden werden.

Vorteilhaft werden Stützstruktur und Folie im 3D-Druck in einem Arbeitsgang hergestellt, dabei kann die Folie aus dem Bindemittel für den metallischen Teil der Stützstruktur ausgebildet werden oder aber aus einem anderen Kunststoffmaterial, welches dann vorteilhaft nicht nur den Träger bildet, sondern die gesamte Stützstruktur überdeckt und erst beim Sintern entfernt wird.

Wenn die Stützstrukturen auf oder in einer Kunststofffolie als Träger aufgebracht werden, werden diese dann auf die metallische Platte aufgelegt und durch Sintern mit dieser verbunden. Dabei werden typischerweise jeweils die Stützstrukturen zu einer Seite der Platte in einer Kunststofffolie aufgebracht und dann mit der Platte durch Sintern verbunden.

Wenn die Dichtungsanordnung für einen Elektrolyseur der PEM-Bauart bestimmt ist, dann besteht die metallische Platte vorteilhaft aus Titan und weist eine Dicke von 0,2 mm bis 0,5 mm auf. Wenn die Dichtungsanordnung für eine Brennstoffzelle vorgesehen ist, dann besteht die metallische Platte vorteilhaft aus Edelstahl und weist eine Dicke zwischen 0,1 mm und 0,2 mm auf.

Die Stützstruktur wird vorteilhaft aus demselben Material wie die metallische Platte gebildet.

Die Stützstruktur sollte einerseits so flach wie möglich und so hoch wie nötig ausgebildet sein. Bevorzugt erstreckt sich die Stützstruktur in einer Richtung senkrecht zur Platte über etwa 0,2 mm bis 1,2 mm.

Die Querschnittsform der Stützstruktur kann variieren, typischerweise sind auf der Platte zu einer Seite zwei Wülste mit Abstand zueinander angeordnet, zwischen denen die Dichtung ausgebildet ist. Diese Wülste können einen halbkreisförmigen, trapezförmigen oder anderen Querschnitt aufweisen, die Wulstbreite beträgt vorteilhaft zwischen 0,2 mm bis 2,0 mm.

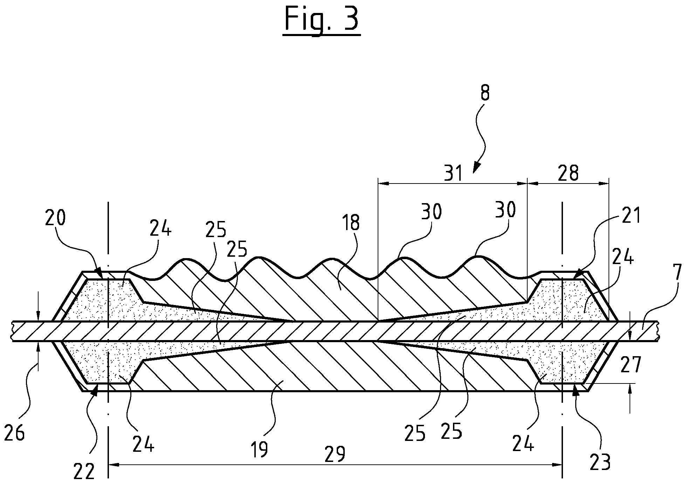

Wie weiter oben angegeben, ist es vorteilhaft, wenn die Stützstruktur neben dem eigentlichen Wulst einen rampenförmig auslaufenden Teil aufweist, der vorteilhaft eine Breite von 0,5 mm bis 7 mm aufweist und deutlich flacher als der eigentliche Wulst ausgebildet ist. Dabei sind die rampenförmig auslaufenden Teile so angeordnet, dass sie einen gewissen Abstand zueinander aufweisen, sodass in dem Bereich dazwischen die Dichtung unmittelbar an der metallischen Platte anliegt. Der mittlere Wulstabstand, das heißt der Abstand der Längsmittellinien, der die eigentlichen Stützstruktur bildenden Wülste, beträgt vorteilhaft zwischen 1,5 mm und 15 mm. Unter mittlerem Abstand im Sinne der Erfindung ist der Abstand der Längsmitten zueinander zu verstehen, so wie dies in Figur 3 weiter unten dargestellt ist.

Die vorgenannten Abmessungen sind insbesondere für Zellanordnungen in Stacks von beispielsweise 5 bis 250 Zellen vorteilhaft, die bei einem Druck von bis zu ca. 100 bar als Elektrolysezellen betrieben werden.

Die Erfindung ist nachfolgend anhand eines in den Zeichnungen darstellten Ausführungsbeispiels dargestellt. Es zeigen
- Fig. 1: eine Draufsicht auf eine Dichtungsanordnung gemäß der Erfindung,
- Fig. 2: in stark vergrößerter schematischer Darstellung einen Schnitt durch eine Elektrolysezelle eines Zellstapels, und
- Fig. 3: in vergrößerter schematischer Schnittdarstellung die metallische Platte im Bereich der Dichtungen und Stützstrukturen

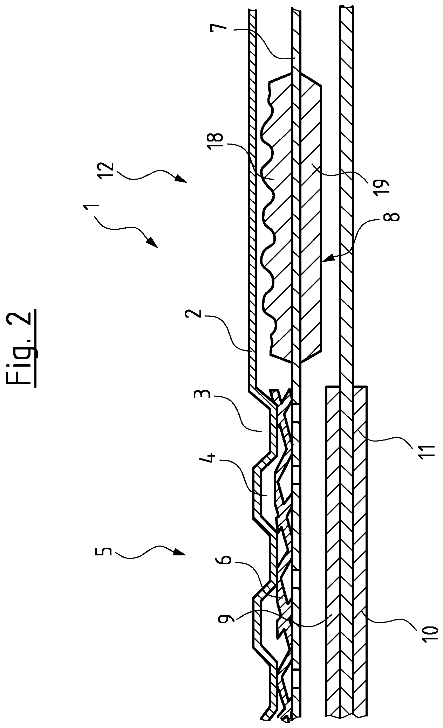

Die anhand der Figuren dargestellte Dichtungsanordnung ist Teil einer elektrochemischen Zelle, deren Aufbau in Figur 2 schematisch dargestellt ist. Die nachfolgend beschriebene Ausführung betrifft eine Dichtungsanordnung für eine Elektrolysezelle zur Erzeugung von Wasserstoff und Sauerstoff aus Wasser unter Einsatz elektrischer Energie. Es versteht sich, dass bei Einsatz anderer Medien oder bei Umkehr des Prozesses (Brennstoffzelle) der grundsätzliche Aufbau der elektrochemischen Zelle unverändert ist, jedoch diverse Modifikationen, sei es hinsichtlich der verwendeten Materialen oder ihrer Anordnung, erforderlich sind.

Derartige elektrochemische Zellen werden zu Zellstapeln, so genannten Stacks aufgebaut, in denen eine Vielzahl solcher Zellen typischerweise elektrisch in Reihe geschaltet und aufeinanderliegend angeordnet sind, wobei der Zellstapel mechanisch durch Zugelemente gehalten ist und innerhalb des Zellstapels Kanäle zum Zu- und Abführen der Medien vorgesehen sind. Diese Kanäle durchsetzen den Stapel senkrecht, um jede einzelne Zelle an die entsprechende Medien Zu- bzw. Abfuhr anzuschließen. Der grundsätzliche Aufbau solcher Zellstapel zählt zum Stand der Technik und ist daher hier nicht im Einzelnen beschrieben. Es wird in diesem Zusammenhang insbesondere aber beispielhaft auf DE 102017 108413 A1 verwiesen, wo ein solcher Aufbau im Einzelnen beschrieben ist.

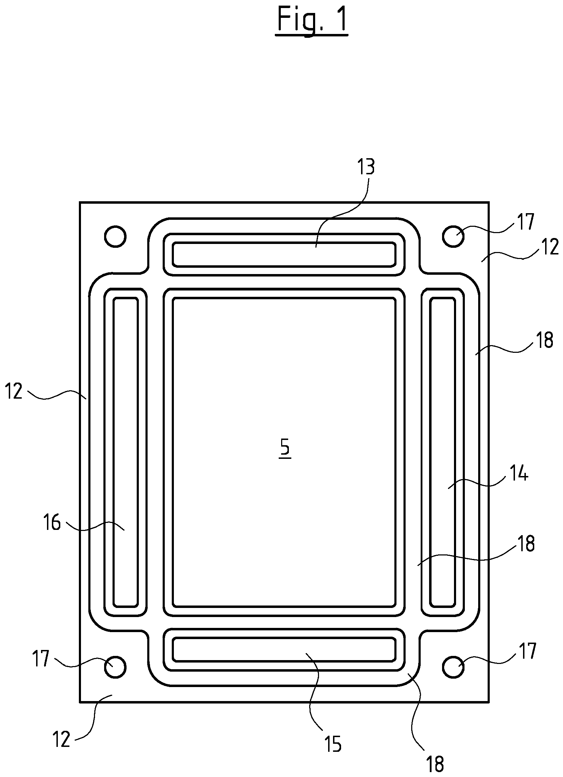

Jede Zelle 1 weist, wie die Schnittdarstellung gemäß Figur 2 verdeutlicht, eine Bipolarplatte 2 auf, welche zu beiden Seiten kanalbildend ausgestattet ist. So sind an der in Figur 2 dargestellten Oberseite Kanäle 3 und an der Unterseite Kanäle 4 gebildet. Die Oberseite ist die im Betrieb wasser- und sauerstoffführende Seite, wohingegen die Unterseite die wasserstoffführende Seite bildet. An die Bipolarplatte 2 schließt sich in dem aktiven Bereich der Zelle 1, welcher in Figur 1 mit 5 gekennzeichnet ist, ein federndes Element 6 an, das durch ein Streckmetall gebildet ist aber auch in anderer Weise ausgebildet sein kann.

Dieses federnde Element 6, welches in Figur 2 mit seiner Oberseite an der Bipolarplatte 2 anliegt, liegt an der Unterseite an einer Platte 7 an, welche Teil einer Dichtungsanordnung 8 ist. Diese Platte 7 ist im aktiven Bereich 5 der Zelle 1, also in dem mittleren Bereich 5 als Lochblech ausgebildet, die eigentliche Dichtungsanordnung 8 ist im Randbereich gebildet. Die Platte 7 liegt in dem aktiven Bereich 5 an einer mediendurchlässigen Schicht 9, die als Porous Transport Layer (PTL) bezeichnet wird. Diese gasdurchlässige Schicht liegt vor einer protonendurchlässigen Membran 10, die im aktiven Bereich 5 der Zelle 1 auch rückseitig mit einer solchen mediendurchlässigen Schicht 11 versehen ist. Die Membran 10 ist in an sich bekannter Weiser zu beiden Seiten mit Elektroden beschichtet, welche als Katalysator wirken. An diese mediendurchlässige Schicht 11 schließt sich dann wiederum eine in Figur 2 nicht dargestellte Bipolarplatte 2 nach unten an, welche Teil der sich daran anschließenden Elektrolysezelle bildet. Der Aufbau der Zelle ist so, dass die Medien durch die Kanäle 3 und 4 zu- bzw. abgeführt werden und flächig bis auf die Membran 10 gelangen können, und zwar in dem aktiven Bereich 5 der Zelle 1.

Die Bauteile 6, 7, 9 und 11 müssten jedoch nicht nur mediendurchlässig sein, um die Reaktanden an die Membran 10 heran- bzw. vor dieser abführen zu können, sie müssen darüber hinaus auch elektrisch leiten können, um den für die Reaktion erforderlichen Strom zuzuführen. Die Kontaktierung erfolgt jeweils über eine Bipolarplatte 2. In der dargestellten Ausführungsform sind daher die Bipolarplatte 2, das federnde Element 6, die Platte 7 und die mediendurchlässige Schicht 11 aus Titan gebildet, und zwar die Bipolarplatte 2 durch ein geprägtes Blech, das federnde Element 6 durch ein nach Art eines Streckmetalls ausgebildeten Blech, die Platte 7 durch eine Titanfolie und die mediendurchlässige Schicht 11 durch ein aus Titanfasern hergestelltes Gewirke, ähnlich eines Filzes. Die mediendurchlässige Schicht 9 ist aus Kohleflies gebildet.

Wie aus Figur 1 ersichtlich ist, ist der aktive Bereich 5 der Zelle 1 von dem zur Kanalbildung und zur Befestigung der Zellen untereinander genutzten Rand 12 zu unterscheiden. In diesem Rand 12 sind senkrecht durch den Stapel von Zellen verlaufende Kanäle 13, 14, 15 und 16 gebildet, über welche die Medienzu- und abfuhr erfolgt. Weiterhin sind in den Eckbereichen Ausnehmungen 17 vorgesehen, welche zum Durchführen von Spannbolzen vorgesehen sind, mit denen der Zellstapel zusammengedrückt und gehalten wird. Es können im Randbereich weitere Ausnehmungen für Zuganker vorgesehen sein.

Wie Figur 1 verdeutlicht, ist die Dichtungsanordnung 8 im Rand 12 umlaufend, also als geschlossener Ring ausgebildet. Dieser geschlossene Ring umgibt die Kanäle 13 bis 16 nach außen. Darüber hinaus weist diese Dichtungsanordnung in sich geschlossene Ringe auf, die jeweils die Kanäle 13 bis 16 umgeben und die den aktiven Bereich 5 umgeben. Letzterer Ring ist abschnittsweise in der Höhe reduziert, um die Kanäle 3 der jeweiligen Zelle 1 mit den senkrecht im Stapel verlaufenden Kanälen 14 und 16 zu verbinden. Über die Kanäle 14 und 16 erfolgt die Versorgung mit Wasser sowie die Abfuhr des entstehenden Sauerstoffs.

Die Verbindung des wasserstoffseitigen Raumes, der u.a. durch die Kanäle 4 und Freiräume im federnden Element 6 gebildet ist, erfolgt dadurch, dass die Dichtung 18 in den zu den Kanälen 13 und 15 benachbarten Bereichen abgesenkt ist, um hier eine Kanalverbindung zu Abfuhr des Wasserstoffes zu schaffen. Die umlaufenden Dichtungen 18 und 19, welche die Kanäle 13 bis 16 nach außen hin umgeben, sind hingegen durchgehend anliegend ausgebildet und dichten die jeweilige Zelle nach außen hin ab.

Diese Dichtungsanordnung 8 umfasst, wie die Figuren 2 und 3 zeigen, eine in den Figuren obere Dichtung 18, welche gegenüber der Bipolarplatte 2 abdichtet und eine untere Dichtung 19, welche gegenüber der Membran 10 abdichtet. Diese Dichtungen 18, 19 bestehen aus Fluorkautschuk und sind aufgespritzt.

Die Dichtung 18 an der Oberseite der Platte 7 ist jeweils nach innen hin, also zu den Kanälen 13 bis 16 mit einer umlaufenden inneren Stützstruktur 20 umgeben und nach außen mit einer äußeren Stützstruktur 21. Die Dichtung 19 an der Unterseite weist entsprechend eine innere Stützstruktur 22 und eine äußere Stützstruktur 23 auf. Jede Stützstruktur (20-23) besteht aus einem umlaufenden Wulst 24 und einem sich seitlich in den Bereich unter der Dichtung 18 bzw. 19 anschließenden rampenförmig auslaufenden Bereich 25. Der rampenförmig Bereich 25 jeder Stützstruktur erstreckt sich vom Wulst 24 etwa in halber Höhe ansetzend bis auf die Platte 7 auslaufend zum gegenüberliegenden Wulst 25 hin. Zwischen den auslaufenden Bereichen 25 ist ein Freiraum gebildet, in welchem die Dichtung 18 bzw. 19 unmittelbar an der Platte 7 anliegt.

Die Platte 7, die bei der dargestellten Ausführungsform aus einer Titanfolie besteht, hat eine Dicke 26 von 0,3 mm. Die sich zu beiden Seiten der Platten erstreckenden Stützstrukturen 20 bis 23 weisen jeweils einen umlaufenden Wulst 24 auf, welcher eine Erstreckung 27 senkrecht zur Platte 7 von 0,6 mm aufweist. Die Breite 28 eines Wulstes 24 beträgt bei der dargestellten Ausführung 1 mm, die Breite 31 des rampenförmig auslaufenden Teils 25 1,5 mm. Der mittlere Abstand 29 der Wulste 24 der inneren Stützstruktur 20 bzw. 22 und der äußeren Stützstruktur 21 bzw. 23 beträgt 8 mm.

Bei der dargestellten Ausführungsform ist die Platte 7 aus einer Titanfolie gebildet, welche in dem aktiven Bereich 5 gelocht ausgebildet ist, um mediendurchlässig zu sein. Die Stützstrukturen 20 und 21 an der Oberseite und 22 und 23 an der Unterseite sind im 3D-Druck erstellt und bestehen ebenfalls aus Titan. Der Verbund untereinander und mit der Platte 7 ist durch Sintern gebildet. Dabei kann die Herstellung unterschiedlich sein, wie einleitend angegeben ist.

Nachdem die Platte 7 mit den darauf befindlichen Stützstrukturen 20 bis 23 gebildet ist, werden die obere Dichtung 18 und die untere Dichtung 19 im Spritzgussverfahren hergestellt. Die Dichtungen liegen dabei in dem Bereich zwischen den auslaufenden rampenförmigen Bereichen 25 unmittelbar an der Platte 7 an. Die Dichtungen überdecken bei der vorliegenden Ausführungsvariante die Wülste 24 vollständig. Während die untere Dichtung 19 eine plane Unterseite als Dichtseite hat, welche mit geringem Abstand von den Wülsten 24 der Stützstruktur 22 bzw. 23 beabstandet ist, weist die obere Dichtung 18 eine im Querschnitt wellenförmige Oberseite, also dichtende Seite auf, wobei die Wellentäler etwa in Höhe der Oberseite der Dichtung im Bereich der Wülste 24 liegen und die Wellengipfel umlaufende Dichtlippen 30 bilden, die demgegenüber deutlich überhöht sind.

### Bezugszeichenliste

- 1: Zelle
- 2: Bipolarplatte
- 3: Kanäle
- 4: Kanäle
- 5: aktiver Bereich der Zelle
- 6: federndes Element
- 7: Platte
- 8: Dichtungsanordnung
- 9: mediendurchlässige Schicht
- 10: Membran
- 11: mediendurchlässige Schicht
- 12: Rand der Platte 7
- 13: senkrechte Kanäle
- 14: senkrechte Kanäle
- 15: senkrechte Kanäle
- 16: senkrechte Kanäle
- 17: Ausnehmungen
- 18: Dichtung oben
- 19: Dichtung unten
- 20: Innere Stützstruktur oben
- 21: Äußere Stützstruktur oben
- 22: Innere Stützstruktur unten
- 23: Äußere Stützstruktur unten
- 24: Wulst
- 25: rampenförmig auslaufender Bereich
- 26: Dicke der Platte 7
- 27: Höhe des Wulstes 24
- 28: Breite des Wulstes 24
- 29: mittlerer Wulstabstand
- 30: Dichtlippen
- 31: Breite des rampenförmig auslaufenden Bereichs

## Patentansprüche

1. Dichtungsanordnung für eine elektrochemische Zelle (1) der PEM-Bauart, insbesondere für einen Elektrolyseur, mit einer metallischen Platte (7) und einer darauf angeordneten Dichtung (18), welche mindestens einen geschlossenen auf der Platte (7) angeordneten Dichtring bildet, **dadurch gekennzeichnet, dass** eine umlaufende, die Dichtung (18) nach innen abstützende innere Stützstruktur (20) gebildet ist und/oder eine die Dichtung (18) nach außen abstützende äußere Stützstruktur (21) gebildet ist, welche aus gesintertem Metall gebildet und stoffschlüssig mit der Platte (7) verbunden sind/ist.

2. Dichtungsanordnung nach Anspruch 1, **dadurch gekennzeichnet, dass** auf beiden Seiten der Platte (7) Dichtungen (18, 19) angeordnet sind, welche auf jeder Seite mindestens einen geschlossenen auf der Platte (7) angeordneten Dichtring bilden, wobei auf jeder Seite der Platte (7) eine umlaufende, die jeweilige Dichtung (18, 19) nach innen abstützende innere Stützstruktur (20, 22) gebildet ist und/oder eine die jeweilige Dichtung nach außen abstützende äußere Stützstruktur (21, 23) gebildet ist, welche aus gesintertem Metall gebildet und stoffschlüssig mit der Platte (7) verbunden sind/ist.

3. Dichtungsanordnung nach Anspruch 1 oder 2, **dadurch gekennzeichnet, dass** die Platte (7) aus gesintertem Metall besteht und im 3D-Druck hergestellt ist.

4. Dichtungsanordnung nach einem der vorhergehenden Ansprüche, **dadurch gekennzeichnet, dass** die Dichtung (18, 19) den Bereich zwischen der inneren und der äußeren Stützstruktur (21, 22; 22, 23) ausfüllt und vorzugsweise zumindest im Bereich zwischen den Stützstrukturen unmittelbar an der Platte (7) anliegt.

5. Dichtungsanordnung nach einem der vorhergehenden Ansprüche, **dadurch gekennzeichnet, dass** die Dichtung (18, 19) die Stützstruktur (20-23) vorzugsweise vollständig überdeckt.

6. Dichtungsanordnung nach einem der vorhergehenden Ansprüche, **dadurch gekennzeichnet, dass** eine, vorzugsweise jede Stützstruktur (20-23) einen ringförmig umlaufenden Wulst (24) aufweist.

7. Dichtungsanordnung nach Anspruch 6, **dadurch gekennzeichnet, dass** die Stützstruktur (20-23) und/oder die Dichtung (18) in den Bereichen, in denen Kanäle (3) gebildet werden, flacher ausgebildet ist als in den übrigen Bereichen oder unterbrochen ist.

8. Dichtungsanordnung nach einem der vorhergehenden Ansprüche, **dadurch gekennzeichnet, dass** die Stützstrukturen (20-23) an den zueinander weisenden Seiten rampenförmig mit Abstand zueinander auslaufend ausgebildet sind.

9. Dichtungsanordnung nach einem der vorhergehenden Ansprüche, **dadurch gekennzeichnet, dass** eine Dichtung (19) an ihrer von der Platte (7) abgewandten Seite eben ausgebildet ist und/oder die andere Dichtung (18) an ihrer von der Platte (7) abgewandten Seite Dichtlippen (30) aufweist, vorzugsweise wellenförmig ausgebildet ist.

10. Dichtungsanordnung nach einem der vorhergehenden Ansprüche, **dadurch gekennzeichnet, dass** die Dichtung (18, 19) nach dem Herstellen der zugehörigen Stützstrukturen (20-23) durch Aufspritzen gebildet ist.

11. Dichtungsanordnung nach einem der vorhergehenden Ansprüche, **dadurch gekennzeichnet, dass** die Platte (7) durch einen Folienabschnitt gebildet ist.

12. Dichtungsanordnung nach einem der vorhergehenden Ansprüche, **dadurch gekennzeichnet, dass** die Stützstrukturen (20-23) im 3D-Druck hergestellt sind.

13. Dichtungsanordnung nach einem der vorhergehenden Ansprüche, **dadurch gekennzeichnet, dass** die Stützstrukturen (20-23) im Siebdruckverfahren auf die Platte (7) aufgebracht sind.

14. Dichtungsanordnung nach einem der vorhergehenden Ansprüche, **dadurch gekennzeichnet, dass** die Stützstrukturen (20-23) durch Sintern gebildet sind.

15. Dichtungsanordnung nach einem der vorhergehenden Ansprüche, **dadurch gekennzeichnet, dass** die Stützstrukturen (20-23) durch Sintern mit der Platte (7) verbunden sind.

16. Dichtungsanordnung nach einem der vorhergehenden Ansprüche, **dadurch gekennzeichnet, dass** eine Stützstruktur (20-23) auf oder in einer Kunststofffolie als Träger auf- bzw. eingebracht ist, wobei die Kunststofffolie auf der Platte (7) angeordnet und beim Sintern entfernt wird.

17. Dichtungsanordnung nach einem der vorhergehenden Ansprüche, **dadurch gekennzeichnet, dass** die Platte (7) aus Titan besteht und eine Dicke (26) von 0,2 bis 0,5 mm hat.

18. Dichtungsanordnung nach einem der vorhergehenden Ansprüche, **dadurch gekennzeichnet, dass** die Platte (7) aus Edelstahl besteht und eine Dicke von 0,1 bis 0,2 mm hat.

19. Dichtungsanordnung nach einem der vorhergehenden Ansprüche, **dadurch gekennzeichnet, dass** die Stützstruktur (20-23) eine Erstreckung (27) senkrecht zur Platte von 0,2 bis 1,2 mm hat.

20. Dichtungsanordnung nach einem der vorhergehenden Ansprüche, **dadurch gekennzeichnet, dass** sich die Stützstruktur (20-23) als Wulst (24) ausgebildet ist mit einer Wulstbreite (28) von 0,2 bis 2,0 mm.

21. Dichtungsanordnung nach einem der vorhergehenden Ansprüche, **dadurch gekennzeichnet, dass** der rampenförmig auslaufende Teil (25) der Stützstruktur (20-23) eine Breite (31) von 0,5 bis 7 mm aufweist.

22. Dichtungsanordnung nach einem der vorhergehenden Ansprüche, **dadurch gekennzeichnet, dass** die Stützstrukturen (20-23) einen mittleren Wulstabstand (29) von 1,5 bis 15 mm aufweisen.

## Claims

1. A sealing arrangement for an electrochemical cell (1) of the PEM type, in particular for an electrolyser, with a metallic plate (7) and a seal (18) arranged thereon, which forms at least one closed sealing ring arranged on the plate (7), **characterised in that**, a circumferential inner support structure (20) supporting the seal (18) inwards is formed, and/or an outer support structure (21) supporting the seal (18) outwards is formed, which is/are made of sintered metal, and is/are connected to the plate (7) in a materially bonded manner.

2. The sealing arrangement in accordance with Claim 1, **characterised in that**, seals (18, 19) are arranged on both sides of the plate (7), which seals form at least one closed sealing ring arranged on the plate (7) on each side, wherein a circumferential inner support structure (20, 22) supporting the respective seal (18, 19) inwards is formed on each side of the plate (7), and/or an outer support structure (21, 23) supporting the respective seal outwards is formed, which is/are formed from sintered metal, and is/are connected to the plate (7) in a materially bonded manner.

3. The sealing arrangement in accordance with Claim 1 or 2, **characterised in that**, the plate (7) consists of sintered metal, and is produced using 3D-printing.

4. The sealing arrangement in accordance with one of the preceding claims, **characterised in that**, the seal (18, 19) fills the area between the inner and outer support structure (21, 22; 22, 23), and preferably lies directly against the plate (7), at least in the area between the support structures.

5. The sealing arrangement in accordance with one of the preceding claims, **characterised in that**, the seal (18, 19) preferably covers the support structure (20-23) completely.

6. The sealing arrangement in accordance with one of the preceding claims, **characterised in that**, one, preferably each, support structure (20-23) has an annular circumferential bead (24).

7. The sealing arrangement in accordance with Claim 6, **characterised in that**, the support structure (20-23) and/or the seal (18) is flatter in the areas in which channels (3) are formed than in the other areas, or is interrupted.

8. The sealing arrangement in accordance with one of the preceding claims, **characterised in that**, the support structures (20-23) are designed to be ramped on the sides facing each other, and are spaced apart from each other.

9. The sealing arrangement in accordance with one of the preceding claims, **characterised in that**, one seal (19) is designed to be flat on its side facing away from the plate (7), and/or the other seal (18) is designed to have sealing lips (30), preferably wavy, on its side facing away from the plate (7).

10. The sealing arrangement in accordance with one of the preceding claims, **characterised in that**, the seal (18, 19) is formed after the production of the associated support structures (20-23) using injection moulding.

11. The sealing arrangement in accordance with one of the preceding claims, **characterised in that**, the plate (7) is formed by a section of film.

12. The sealing arrangement in accordance with one of the preceding claims, **characterised in that**, the support structures (20-23) are produced using 3D-printing.

13. The sealing arrangement in accordance with one of the preceding claims, **characterised in that**, the support structures (20-23) are applied to the panel (7) using the screen printing method.

14. The sealing arrangement in accordance with one of the preceding claims, **characterised in that**, the support structures (20-23) are formed by means of sintering.

15. The sealing arrangement in accordance with one of the preceding claims, **characterised in that**, the support structures (20-23) are connected to the plate (7) by means of sintering.

16. The sealing arrangement in accordance with one of the preceding claims, **characterised in that**, a support structure (20-23) is applied or introduced on or in a plastic film as a carrier, wherein the plastic film is arranged on the plate (7), and removed during the sintering.

17. The sealing arrangement in accordance with one of the preceding claims, **characterised in that**, the plate (7) consists of titanium, and has a thickness (26) of 0.2 to 0.5 mm.

18. The sealing arrangement according to one of the preceding claims, **characterised in that**, the plate (7) is made of stainless steel and has a thickness of 0.1 to 0.2 mm.

19. The sealing arrangement according to one of the preceding claims **characterised in that**, the support structure (20-23) has an extent (27) perpendicular to the plate of 0.2 to 1.2 mm.

20. The sealing arrangement according to one of the preceding claims, **characterised in that**, the support structure (20-23) is formed as a bead (24) with a bead width (28) of 0.2 to 2.0 mm.

21. The sealing arrangement according to one of the preceding claims, **characterised in that**, the ramped part (25) of the support structure (20-23) has a width (31) of 0.5 to 7 mm.

22. The sealing arrangement according to one of the preceding claims, **characterised in that**, the support structure (20-23) has an average bead spacing (29) of 1.5 to 15 mm.

## Revendications

1. Ensemble d'étanchéité, destiné à une cellule électrochimique (1) de type PEM, destiné notamment à un électrolyseur, pourvu d'une plaque (7) métallique et d'un joint (18) placé sur celle-ci, lequel constitue au moins une bague d'étanchéité fermée, placée sur la plaque (7), **caractérisé en ce qu'**une structure de soutien (20) soutenant le joint (18) vers l'intérieur est constituée et / ou **en ce qu'**une structure de soutien (21) soutenant le joint (18) vers l'extérieur est constituée, laquelle / lesquelles est / sont constituée(s) en métal fritté et est / sont assemblée(s) par conjugaison de matières avec la plaque (7).

2. Ensemble d'étanchéité selon la revendication 1, **caractérisé en ce que** sur les deux faces de la plaque (7) sont placés des joints (18, 19), lesquels constituent sur chaque face au moins une bague d'étanchéité fermée, placée sur la plaque (7), sur chaque face de la plaque (7) étant constituée une structure de soutien (20, 22) périphérique interne, soutenant le joint (18, 19) respectif vers l'intérieur et / ou étant constituée une structure de soutien (21, 23) externe, soutenant le joint respectif vers l'extérieur, laquelle / lesquelles est / sont constituée(s) en métal fritté et est / sont assemblée(s) par conjugaison de matières avec la plaque (7).

3. Ensemble d'étanchéité selon la revendication 1 ou 2, **caractérisé en ce que** la plaque (7) est conçue en métal fritté et est fabriquée par impression en 3D.

4. Ensemble d'étanchéité selon l'une quelconque des revendications précédentes, **caractérisé en ce que** le joint (18, 19) remplit la zone entre la structure de soutien (21, 22 ; 22, 23) interne et externe et est de préférence directement adjacent à la plaque (7) au moins dans la zone entre les structures de soutien.

5. Ensemble d'étanchéité selon l'une quelconque des revendications précédentes, **caractérisé en ce que** le joint (18, 19) recouvre de préférence totalement la structure de soutien (20 à 23).

6. Ensemble d'étanchéité selon l'une quelconque des revendications précédentes, **caractérisé en ce qu'**une, de préférence chaque structure de soutien (20 à 23) comporte un bourrelet (24) annulaire périphérique.

7. Ensemble d'étanchéité selon la revendication 6, **caractérisé en ce que** dans la zone, dans laquelle des canaux (3) sont constitués, la structure de soutien (20 à 23) et / ou le joint (18) sont conçu(e)s de forme plus plate que dans les autres zones ou sont interrompu(e)s.

8. Ensemble d'étanchéité selon l'une quelconque des revendications précédentes, **caractérisé en ce que** sur les faces dirigées l'une vers l'autre, les structures de soutien (20 à 23) sont conçues sous la forme de rampes en dégagement vers l'extérieur avec un écart mutuel.

9. Ensemble d'étanchéité selon l'une quelconque des revendications précédentes, **caractérisé en ce que** sur sa face opposée à la plaque (7), un joint (19) est conçu de forme plane et / ou **en ce que** sur sa face opposée à la plaque (7), l'autre joint (18) comporte des lèvres d'étanchéité (30), est conçu de préférence de forme ondulée.

10. Ensemble d'étanchéité selon l'une quelconque des revendications précédentes, **caractérisé en ce qu'**après la fabrication des structures de soutien (20 à 23) associées, le joint (18, 19) est constitué par pulvérisation.

11. Ensemble d'étanchéité selon l'une quelconque des revendications précédentes, **caractérisé en ce que** la plaque (7) est constituée par un segment de feuille.

12. Ensemble d'étanchéité selon l'une quelconque des revendications précédentes, **caractérisé en ce que** les structures de soutien (20 à 23) sont fabriquées par impression en 3D.

13. Ensemble d'étanchéité selon l'une quelconque des revendications précédentes, **caractérisé en ce que** les structures de soutien (20 à 23) sont appliquées sur la plaque (7) par sérigraphie.

14. Ensemble d'étanchéité selon l'une quelconque des revendications précédentes, **caractérisé en ce que** les structures de soutien (20 à 23) sont constituées par frittage.

15. Ensemble d'étanchéité selon l'une quelconque des revendications précédentes, **caractérisé en ce que** les structures de soutien (20 à 23) sont assemblées avec la plaque (7) par frittage.

16. Ensemble d'étanchéité selon l'une quelconque des revendications précédentes, **caractérisé en ce qu'**une structure de soutien (20 à 23) est appliquée ou insérée en tant que support sur ou dans une feuille de matière plastique, la feuille en matière plastique étant placée sur la plaque (7) et retirée lors du frittage.

17. Ensemble d'étanchéité selon l'une quelconque des revendications précédentes, **caractérisé en ce que** la plaque (7) est conçue en titane et a une épaisseur (26) de 0,2 à 0,5 mm.

18. Ensemble d'étanchéité selon l'une quelconque des revendications précédentes, **caractérisé en ce que** la plaque (7) est conçue en acier inoxydable et a une épaisseur de 0,1 à 0,2 mm.

19. Ensemble d'étanchéité selon l'une quelconque des revendications précédentes, **caractérisé en ce que** la structure de soutien (20 à 23) a une extension (27) perpendiculaire à la plaque de 0,2 à 1,2 mm.

20. Ensemble d'étanchéité selon l'une quelconque des revendications précédentes, **caractérisé en ce que** la structure de soutien (20 à 23) est conçue sous la forme d'un bourrelet (24) et avec une largeur de bourrelet (28) de 0,2 à 2,0 mm.

21. Ensemble d'étanchéité selon l'une quelconque des revendications précédentes, caractérisé en ce la partie (25) en forme de rampe dégagée vers l'extérieur de la structure de soutien (20 à 23) a une largeur (31) de 0,5 à 7 mm.

22. Ensemble d'étanchéité selon l'une quelconque des revendications précédentes, **caractérisé en ce que** les structures de soutien (20 à 23) présentent un écart (29) moyen entre les bourrelets de 1,5 à 15 mm.
